**Europäisches Patentamt**

**European Patent Office**

**Office européen des brevets**

(19)

(11) Veröffentlichungsnummer: **0 230 299**
**B1**

(12) # EUROPÄISCHE PATENTSCHRIFT

(45) Veröffentlichungstag der Patentschrift:
**13.12.89**

(51) Int. Cl.⁴: **C05G 3/08**, C05C 3/00

(21) Anmeldenummer: **87100662.3**

(22) Anmeldetag: **20.01.87**

(54) **Verfahren zum Aufbringen von feinteiligem Dicyandiamid auf ammonium- und sulfatgruppenhaltigen Düngemitteln.**

(30) Priorität: **22.01.86 DE 3601805**

(43) Veröffentlichungstag der Anmeldung:
**29.07.87 Patentblatt 87/31**

(45) Bekanntmachung des Hinweises auf die Patenterteilung:
**13.12.89 Patentblatt 89/50**

(84) Benannte Vertragsstaaten:
**AT BE CH DE ES FR GB IT LI NL SE**

(56) Entgegenhaltungen:
**EP-A- 0 022 536**
**EP-A- 0 076 910**
**DE-A- 2 603 917**
**DE-A- 3 237 905**

(73) Patentinhaber: **BASF Aktiengesellschaft,
Carl-Bosch-Strasse 38, D-6700 Ludwigshafen(DE)**

(72) Erfinder: **Meiss, Otto, Hochfeldstrasse 20,
D-6700 Ludwigshafen(DE)**
Erfinder: **Nitzschmann, Robert E. Dr.,
Anselm-Feuerbach-Strasse 6, 6710 Frankenthal(DE)**

**Beschreibung**

Vorliegende Erfindung betrifft ein Verfahren zur Herstellung von Dicyandiamid enthaltenden Stickstoffdüngemitteln mit Langzeitwirkung.

Es ist bekannt, daß ammoniumhaltige Stickstoffdüngemittel im Boden durch Bakterien zu Nitrit und Nitrat umgewandelt werden. Diese Nitrifikation findet besonders in gut durchlüfteten, neutral bis alkalisch reagierenden Böden verhältnismäßig rasch statt. Wegen seiner großen Beweglichkeit im Boden ist der Nitratstickstoff insbesondere in Gebieten mit hohen Niederschlagsmengen ständig von Auswaschungsverlusten bedroht. Um diese Nitrifikation zu verlangsamen ist es bekannt, den genannten Stickstoffdüngemitteln sogenannte Nitrifikationsinhibitoren zuzusetzen, wofür schon die verschiedensten Verbindungen bekannt geworden sind. Diese Verbindungen können schon in geringen Konzentrationen die Wirkung der im Boden vorhandenen nitrifizierenden Bakterien verlangsamen, so daß das im Boden verhältnismäßig gut haftende Ammoniumion nur langsam in das zwar von den Pflanzen gut aufnehmbare aber auch leicht auswaschbare Nitration umgewandelt wird. Solche Nitrifikationsinhibitoren enthaltende Stickstoffdüngemittel zeichnen sich demzufolge durch eine verzögerte Stickstoffzulieferung aus.

Aus der französischen Patentschrift 1 232 366 ist die nitrifikationshemmende Wirkung von Dicyandiamid bekannt. Das Dicyandiamid kann dem Düngemittel während seiner eigentlichen Herstellung oder während der Granulation zugesetzt werden. Im ersteren Fall erhält man ein Düngemittelkorn, in dem das Dicyandiamid gleichmäßig verteilt, während im letzten Fall, das Dicyandiamid nur auf der Oberfläche des Korns vorliegt.

Bei der Einbringung des Dicyandiamids in das Düngemittel vor der Granulation läßt es sich nicht vermeiden, daß es bei den üblichen Temperaturen von 100 bis 140°C in der Schmelze und bei der Granulation in Verbindung mit den relativ langen mittleren Verweilzeiten bei diesen Temperaturen von mindestens etwa 30 Minuten zu Zersetzungen des Dicyandiamides kommt. Die Verluste an Dicyandiamid bei dieser Arbeitsweise betragen 30 % und mehr.

Die Aufbringung des Dicyandiamids auf die fertig granulierten Düngemittel hat den Nachteil, daß das Dicyandiamid nicht fest auf der Oberfläche haftet und bei der Handhabung des Düngemittels zu lästigem Abrieb und Stauben führt. Zur Beseitigung dieses Nachteils ist es aus der DE-C 25 31 962 bekannt, das Dicyandiamid in einer Korngröße kleiner als 0,3 mm auf die Oberfläche der Ammonium- oder amidgruppenhaltigen Verbindungen unter Verwendung eines Haftvermittlers aufzubringen. Als Haftvermittler werden pflanzliche, tierische oder mineralische Öle, wie z.B. Sojaöl, Klauenöl oder Schweröl verwendet. Dieses Verfahren hat den Nachteil, daß mit den Haftvermittlern düngemittelfremde, organische und/oder anorganische Materialien in das Düngemittel eingebracht werden. Außerdem ziehen die Öle in das Düngemittelkorn ein, wodurch ihre haftvermittelnde Wirkung vermindert, wenn nicht gar ganz aufgehoben wird.

Daneben ist es gemäß EP-A 76 910 bekannt, Dicyandiamid bei gleichzeitigem Aufsprühen einer Ca(NO₃)₂-Lösung zu granulieren.

Es ist auch ferner gemäß DE-A 2 603 917 bekannt, Animoniumsulfat-Dünger, der als Granulat vorliegt, mit Ca(NO₃)₂-Lösung zu besprühen, um die Kornhärte zu erhöhen.

Der vorliegenden Erfindung lag die Aufgabe zugrunde ein Verfahren zum Aufbringen von feinteiligem Dicyandiamid auf die Oberflächen von ammonium- und sulfatgruppenhaltigen festen Düngemitteln bereitzustellen, bei dem eine Zersetzung des Dicyandiamids weitgehend unterbunden ist und das gleichzeitig eine haftende Verbindung zwischen Dicyandiamid und Düngemittel gewährleistet.

Es wurde gefunden, daß diese Aufgabe dadurch gelöst werden kann, daß die Düngemittel, die eine Temperatur von 60 bis 130°C aufweisen mit dem pulverförmigem Dicyandiamid vermischt und gleichzeitig oder unmittelbar anschließend mit einer Calciumnitrat enthaltenden wäßerigen Lösung unter weiterer Vermischung versetzt werden. Vorzugsweise weisen die Düngemittel eine Temperatur von 80 bis 120°C auf.

Das erfindungsgemäße Verfahren eignet sich sowohl für die Behandlung von kristallinen bzw. pulverförmigen als auch für granulierte Düngemittel. Die Menge des aufzubringenden Dicyandiamids beträgt zweckmäßig 1 bis 6 Gew.%, vorzugsweise 2 bis 4 Gew. %, bezogen auf das Düngemittel.

Die erforderliche Menge an Calciumnitrat, ist abhängig von der aufzubringenden Dicyandiamidmenge, der Korngröße des Düngemittels sowie dessen Oberflächenbeschaffenheit und liegt zwischen 0,2 bis 6 Gew.%, bezogen auf das Düngemittel. Bei feinteiligen Düngemitteln, d.h. bei Düngemitteln mit größerer Oberfläche bzw. bei der Aufbringung größerer Dicyandiamidmengen wird nun im allgemeinen eine Menge an Calciumnitratlösung benötigt, die im oberen Bereich liegt.

Das Dicyandiamid besitzt vorteilhaft eine Korngröße von unter 0,2 mm. Die erfindungsgemäße Aufbringung des Dicyandiamids erfolgt unter Vermischung der beiden Komponenten - Düngemittel und Dicyandiamid - mit der Calciumnitratlösung in dafür geeigneten Vorrichtungen z.B. Drehtrommeln, Granuliertellern und dgl. Da die Düngemittel, seien sie kristallisiert oder granuliert, herstellungsbedingt ohnehin eine Temperatur in dem angegebenen Bereich aufweisen, brauchen sie nicht vor der erfindungsgemäßen Behandlung aufgewärmt zu werden. Das Calciumnitrat kann entweder gleichzeitig oder anschließend an die Vermischung des Dicyandiamids mit dem Düngemittel aufgegeben werden. Das Calciumnitrat wird in Form von wäßrigen Lösungen aufgebracht, die im allgemeinen eine Konzentration von 40 bis 50 Gew.-% aufweisen. Die Konzentrationen an Ca(NO₃)₂ können auch niedriger sein, insbesondere dann, wenn der Wärmeinhalt des heißen Düngemittels ausreicht die Wassermenge zu verdampfen. Die Calciumnitratlösungen können auch Ammoniumnitrat enthalten in einem Gewichtsverhältnis Ca(NO₃)₂:NH₄NO₃ von 1:1 bis 3:1.

Durch die gleichzeitige oder anschließende Zugabe der wäßrigen Calciumnitratlösungen wird das Düngemittel oberflächlich rasch abgekühlt und eine Zersetzung des Dicyandiamids praktisch weitgehend verhindert.

Nach der Zugabe der Calciumnitratlösung wird das Düngemittel wie üblich abgekühlt und/oder mit üblichen Antibackmitteln behandelt. Die erfindungsgemäß behandelten ammoniumgruppen- und sulfatgruppenhaltigen Düngemittel besitzen besonders glatte und abriebarme Oberflächen, die frei von düngemittelfremden organischen und/oder anorganischen Haftvermitteln sind. Durch die erfindungsgemäße Aufbringung des Dicyandiamids mit dem Düngemittel nach der Formgebung werden lange Verweilzeiten des Dicyandiamids bei hohen Temperaturen vermieden. Außerdem besteht zusätzlich die Möglichkeit, die Temperatur des Düngemittels vor der Aufbringung des Dicyandiamids durch Vorkühlung abzusenken. Man hat somit die Möglichkeit, Temperatur und Verweilzeit den jeweiligen Erfordernissen anzupassen und somit Verluste an Dicyandiamid zu vermeiden. Das zusätzlich eingebrachte Wasser wird teilweise verdampft, teilweise als Hydratwasser in dem sich bildenden Gips gebunden und führt praktisch nicht zu einem höheren Wassergehalt im Fertigprodukt.

Beispiel 1

Auf einem Drehteller werden 250 kg Ammonsulfatsalpetergranalien (Korndurchmesser von 1,5 bis 5 mm) mit einer Temperatur von 90 bis 95°C mit 10 kg Dicyandiamid vermischt. Nach 4 Minuten Mischzeit werden 0,75 kg einer 45 gew.%igen Calciumnitratlösung (20°C) unter weiterem Vermischen (2 Minuten) aufgeprüht. Anschließend wird das Produkt gekühlt und gelagert. Das Produkt besitzt eine glatte Oberfläche und staubt nicht bei der Handhabung.

Beispiel 2

Wie in Beispiel 1 beschrieben, wird auf Ammonsulfatsulpetergranalien 0,75 kg einer Lösung aufgesprüht, die 40 Gew.% $Ca(NO_3)_2$ und 25 Gew.% $NH_4NO_3$ enthält. Auch hier wird das Dicyandiamid vollständig eingebunden und ein staubarmes Produkt mit glatter Oberfläche erhalten.

Beispiel 3

In einer liegenden, 12 m langen und 3 m dicken kontinuierlich mit 40 t/h Ammonsulfatsalpetergranalien (Korngröße von 1,5 bis 5 mm, Temperatur 105°C) beschichteten Drehrohrtrommel mit einer mittleren Produktverweilzeit von ca. 15 Minuten werden kontinuierlich 1,6 t/h Dicyandiamid zugemischt. Nach kurzer Mischstrecke (ca. 10 % Trommelänge) werden 120 kg/h einer Calciumnitratlösung mit 45 Gew.% $Ca(NO_3)_2$ aufgebracht. Das aus der Trommel ausgetragene Produkt hat eine glatte, abriebsfeste Oberfläche.

Beispiel 4

In der in Beispiel 3 beschriebenen Drehrohrtrommel werden 60 t/h eines sulfat- und ammoniumgruppenhaltigen NPK-Düngers (Korngröße 1,5 bis 5 mm, Temperatur 100°C) durchgesetzt und mit 2,4 t/h Dicyandiamid versetzt. Nach kurzer Mischstrecke (ca. 10 % Trommellänge) werden 180 kg/h einer 45 gew.%igen Calciumnitratlösung aufgesprüht. Am Ende der Trommel fällt ein nicht staubendes Produkt mit glatter Oberfläche an.

Beispiel 5

Auf einem Drehteller von 3 m Durchmesser werden 250 kg kristallines Ammonsulfat (Korngröße 0,5 bis 1,5 mm), mit einer Temperatur von 100°C mit 10 kg Dicyandiamid gemischt. Nach 4 Minuten Mischzeit erfolgt die Zugabe von 15 kg einer 45 gew.%igen Kalziumnitratlösung. Nach einer weiteren Mischzeit von 2 Minuten ist die Herstellung abgeschlossen. Das Produkt staubt bei der Handhabung nicht.

Beispiel 6

Auf einem Drehteller gemäß Beispiel 5 werden 250 kg granuliertes Ammonsulfat (Korngröße 1 bis 5 mm) mit einer Temperatur von 100°C mit 10 kg Dicyandiamid gemischt. Nach 4 Minuten Mischzeit erfolgt die Zugabe von 4 kg einer 45 gew.%igen Kalziumnitratlösung. Nach einer weiteren Mischzeit von 2 Minuten kann das glänzende, abriebfeste Produkt dem Teller entnommen werden.

**Patentansprüche**

1. Verfahren zum Aufbringen von feinteiligem Dicyandiamid auf die Oberflächen von ammonium- und sulfatgruppenhaltigen Düngemitteln, dadurch gekennzeichnet, daß die Düngemittel, die eine Temperatur von 60 bis 130 °C aufweisen mit dem pulverförmigen Dicyandiamid vermischt und gleichzeitig oder anschließend mit einer Calciumnitrat enthaltenden wäßrigen Lösung unter weiterer Vermischung versetzt werden.

2. Verfahren nach Anspruch 1, dadurch gekennzeichnet, daß man auf die Düngemittel 1 bis 6 Gew.% Dicyandiamid, bezogen auf das Düngemittel aufbringt.

3. Verfahren nach Ansprüchen 1 bis 2, dadurch gekennzeichnet, daß man auf das Düngemittel 0,2 bis 6 Gew.% Calciumnitrat in Form von wäßrigen Lösungen aufbringt.

4. Verfahren nach Ansprüchen 1 bis 3, dadurch gekennzeichnet, daß die Calciumnitrat enthaltenden wäßrigen Lösungen eine Konzentration von 40 bis 50 Gew.% aufweisen.

5. Verfahren nach Ansprüchen 1 bis 4, dadurch gekennzeichnet, daß die Düngemittel eine Temperatur von 80 bis 120 °C aufweisen.

## Claims

1. A process for applying finely divided dicyandiamide to the surface of an ammoniun-containing and sulfate-containing fertilizer, wherein the fertilizer, which is at 60–130°C, is mixed with the powdered dicyandiamide, and at the same time or directly thereafter an aqueous solution containing calcium nitrate is added with further mixing.

2. A process as claimed in claim 1, wherein from 1 to 6% by weight, based on the fertilizer, of dicyandiamide are applied to the fertilizer.

3. A process as claimed in claim 1 or 2, wherein from 0.2 to 6% by weight of calcium nitrate in the form of an aqueous solution are applied to the fertilizer.

4. A process as claimed in claim 1 or 2 or 3, wherein the aqueous solution containing calcium nitrate has a concentration of from 40 to 50% by weight.

5. A process as claimed in claim 1 or 2 or 3 or 4, wherein the fertilizer is at from 80 to 120°C.

## Revendications

1. Procédé pour l'application de dicyandiamide finement divisé à la surface d'engrais contenant des groupements ammonium et sulfate, caractérisé en ce qu'on mélange les engrais, qui sont à une température de 60 à 130°C, avec le dicyandiamide pulvérisé et on ajoute simultanément ou ensuite une solution aqueuse contenant du nitrate de calcium en poursuivant le mélange.

2. Procédé selon la revendication 1, caractérisé en ce qu'on applique sur les engrais de 1 à 6% en poids de dicyandiamide, par rapport aux engrais.

3. Procédé selon l'une ou l'autre des revendications 1 et 2, caractérisé en ce qu'on applique aux engrais de 0,2 à 6% en poids de nitrate de calcium sous forme d'une solution aqueuse.

4. Procédé selon les revendications 1 à 3, caractérisé en ce que les solutions aqueuses contenant le nitrate de calcium ont une concentration de 40 à 50% en poids.

5. Procédé selon les revendications 1 à 4, caractérisé en ce que les engrais sont à une température de 80 à 120°C.